Europäisches Patentamt

European Patent Office

Office européen des brevets

(11) Veröffentlichungsnummer: **0 304 544**
**A1**

## (12) EUROPÄISCHE PATENTANMELDUNG

(21) Anmeldenummer: **88106710.2**

(22) Anmeldetag: **27.04.88**

(51) Int. Cl.⁴: **B60R 13/06**

(30) Priorität: **22.08.87 DE 3728085**

(43) Veröffentlichungstag der Anmeldung:
**01.03.89 Patentblatt 89/09**

(84) Benannte Vertragsstaaten:
**DE FR GB IT**

(71) Anmelder: **VDO Adolf Schindling AG**
**Gräfstrasse 103**
**D-6000 Frankfurt/Main(DE)**

(72) Erfinder: **Kober, Rainer**
**Am Schlägelsgraben 12**
**D-6100 Darmstadt 12(DE)**
Erfinder: **Möheken, Gerhard**
**An der Untermühle 7a**
**D-6370 Oberursel 5(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Schliesshilfe.**

(57) Die Erfindung bezieht sich auf eine Schließhilfe für Kraftfahrzeugtüren mit einer als hohles Schlauchprofil ausgebildeten Türdichtung 3, die an einem Türrahmen 2 angeordnet ist und durch die der Spalt zwischen dem Randbereich der Fahrzeugtür 1 und dem Türrahmen 2 im geschlossenen Zustand der Fahrzeugtür 1 ausfüllbar ist. Dabei ist der Innenraum 4 des Schlauchprofils druckbeaufschlagbar. Die Höhe des drucks im Innenraum 4 des Schlauchprofils ist in Abhängigkeit von der Fahrgeschwindigkeit des Fahrzeugs regelbar.

FIG. 1

EP 0 304 544 A1

## Schließhilfe

Die Erfindung betrifft eine Schließhilfe für Fahrzeugtüren, insbesondere für Kraftfahrzeugtüren, mit einer als hohles Schlauchprofil ausgebildeten Türdichtung, die an einem Türrahmen angeordnet ist und durch die der Spalt zwischen dem Randbereich der Fahrzeugtür und dem Türrahmen im geschlossenen Zustand der Fahrzeugtür ausfüllbar ist, wobei der Innenraum des Schlauchprofils druckbeaufschlagbar ist.

Bei derartigen bekannten Schließhilfen ist der Innenraum des Schlauchprofils mit einem bestimmten Überdruck beaufschlagbar, um eine sichere Abdichtung zwischen Tür und Türrahmen bei geschlossener Tür zu erreichen.

Da bei heute üblichen Fahrzeugtüren diese an ihrer Außenseite eine tragflügelähnliche Form besitzen, entsteht mit zunehmender Fahrgeschwindigkeit durch den Fahrtwind eine sich vergrößernde Sogwirkung auf die Tür, die an dieser in Öffnungsrichtung angreift. Dies führt dazu, daß die Tür in dem ihr möglichen Spiel soweit in Öffnungsrichtung bewegt wird, daß die Dichtwirkung der Türdichtung erheblich reduziert wird. Außerdem kommt es durch das nicht mehr vollständige Ausfüllen des Spaltes zwischen der Tür und dem Türrahmen zu einer sich mit steigender Fahrgeschwindigkeit erhöhenden Geräuschbildung.

Es ist daher Aufgabe der Erfindung, eine Schließhilfe nach dem Oberbegriff zu schaffen, die bei allen Fahrbedingungen sowohl eine einwandfreie Abdichtung der geschlossenen Tür gewährleistet, als auch eine Vermeidung störender Geräusche bewirkt.

Diese Aufgabe wird erfindungsgemäß dadurch gelöst, daß die Höhe des Drucks im Innenraum des Schlauchprofils in Abhängigkeit von der Fahrgeschwindigkeit des Fahrzeugs regelbar ist.

Damit kann das Schlauchprofil immer mit dem zu einem einwandfreien Ausfüllen des Spiels zwischen Tür und Türrahmen erforderlichen Druck beaufschlagt werden. Gleichzeitig wird aber eine unnötig hohe Druckbeaufschlagung vermieden, die entweder eine stabilere Konstruktion der Türdichtung und damit höhere Schließkräfte erfordern, oder die Lebensdauer der Türdichtung erheblich herabsenken würde.

Vorzugsweise ist der Innenraum des Schlauchprofils von einer Überdruckquelle beaufschlagbar, die eine Pumpe sein kann.

Zur Betätigung der Überdruckquelle kann diese von einer Steuereinheit ansteuerbar sein, wobei vorzugsweise die Überdruckquelle über ein Steuerventil mit dem Innenraum des Schlauchprofils verbindbar ist.

Dabei kann das Steuerventil ebenfalls von der Steuereinheit ansteuerbar sein. Das Steuerventil ist vorzugsweise ein Magnetventil.

Zur Auslösung der Steuerung kann die Steuereinheit eine Regeleinheit aufweisen, der ein Geschwindigkeitssignal der Fahrgeschwindigkeit des Fahrzeugs sowie ein Drucksignal des Drucks im Innenraum des Schlauchprofils zuleitbar ist.

Das Geschwindigkeitssignal kann von einem Geschwindigkeitsgeber und das Drucksignal von einem den Druck im Innenraum des Schlauchprofils erfassenden Druckgeber erfaßbar und der Regeleinheit zuleitbar sein.

Platzsparend kann die Regeleinheit eine elektronische Regeleinheit sein und die Druckregelung nach einer Funktion $P_{ü} = f(v)$ erfolgen, die in einem Speicher der Regeleinheit gespeichert ist. Dabei ist $P_{ü}$ der einzuregelnde Druck und v die dazugehörende Fahrgeschwindigkeit. Zur Bestimmung dieser Funktion, die eine fahrzeugspezifische Funktion ist, werden unter anderem die Strömungsverhältnisse der Fahrtwindumströmung der Fahrzeugtür, die Ausgestaltung und Anordnung der Türdichtung und die Ausgestaltung des Spaltes zwischen Tür und Türrahmen berücksichtigt.

Vorzugsweise ist dabei die Druckregelung eine Dreipunktregelung, durch die bei geringerem Innenraumdruck als dem der momentanen Fahrgeschwindigkeit entsprechenden Solldruck der Innenraum von der Überdruckquelle druckbeaufschlagbar ansteuerbar ist, durch die bei dem Solldruck entsprechendem Innenraumdruck der Innenraum absperrbar ist und durch die bei größerem Innenraumdruck als dem der momentanen Fahrgeschwindigkeit entsprechenden Solldruck der Innenraum mit der Atmosphäre verbindbar ist.

Um ein permanentes Regeln und damit eine übermäßige Belastung der Steuereinheit zu vermeiden, ist vorzugsweise eine Druckregelung unterhalb einer Mindestabweichung des Innenraumdruckes von dem der momentanen Fahrgeschwindigkeit entsprechenden Solldruck sperrbar, so daß die Dreipunktregelung eine Regelung mit einem Toleranzband ist.

Ein Ausführungsbeispiel der Erfindung ist in der Zeichnung dargestellt und wird im folgenden näher beschreiben. Es zeigen.

Figur 1 eine Schließhilfe

Figur 2 ein Flußdiagramm der Regelung der Schließhilfe

Figur 3 ein Diagramm einer Druckregelfunktion

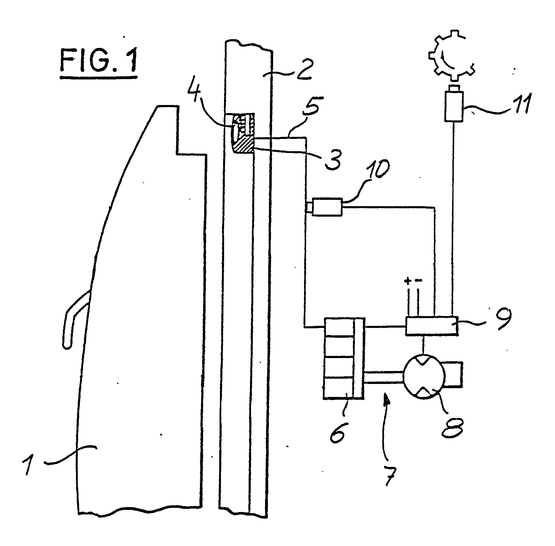

In Figur 1 ist eine Fahrzeugtür 1 dargestellt, die sich zu einem Türrahmen 2 in offener Position befindet.

Dem Randbereich der Fahrzeugtür 1 gegenüberliegend ist am Türrahmen 2 eine Türdichtung 3 angeordnet, an die im geschlossenen Zustand der Tür der Randbereich der Tür zur Anlage kommt.

Die Türdichtung 3 ist als hohles Schlauchprofil mit einem Innenraum 4 ausgebildet, der über eine Druckleitung 5 und ein Magnetventil 6 einer Steuereinheit 7 mit einer Pumpe 8 verbindbar ist.

Die Steuereinheit weist weiterhin eine elektronische Regeleinheit 9 auf, durch die die Pumpe 8 und das Magnetventil 6 ansteuerbar sind.

Von einem den Druck im Innenraum 4 erfassenden Druckgeber 10 wird ein Drucksignal und einem die Fahrgeschwindigkeit des Fahrzeugs erfassenden Geschwindigkeitsgeber 11 ein Geschwindigkeitssignal der Regeleinheit 9 zugeleitet.

In der Regeleinheit 9 sind für die Druckregelung des im Innenraum 4 herrschenden Druckes Solldruckwerte gespeichert, die eine Funktion $P_{ü} = f(v)$ erfüllen, wobei $P_{ü}$ der einzuregelnde Sollüberdruck und v die zu diesem Sollüberdruck gehörende Fahrgeschwindigkeit ist.

Diese Funktion ist in dem Diagramm in Figur 3 dargestellt, in welchem der Überdruck $P_{ü}$ der Fahrgeschwindigkeit v gezeigt ist.

Es wird somit der Innenraum 4 bei steigender Fahrgeschwindigkeit auch mit einem ansteigenden Überdruck beaufschlagt.

In dargestellten Fall ist die Funktion eine lineare Funktion. Sie kann aber auch eine nichtlineare Funktion sein.

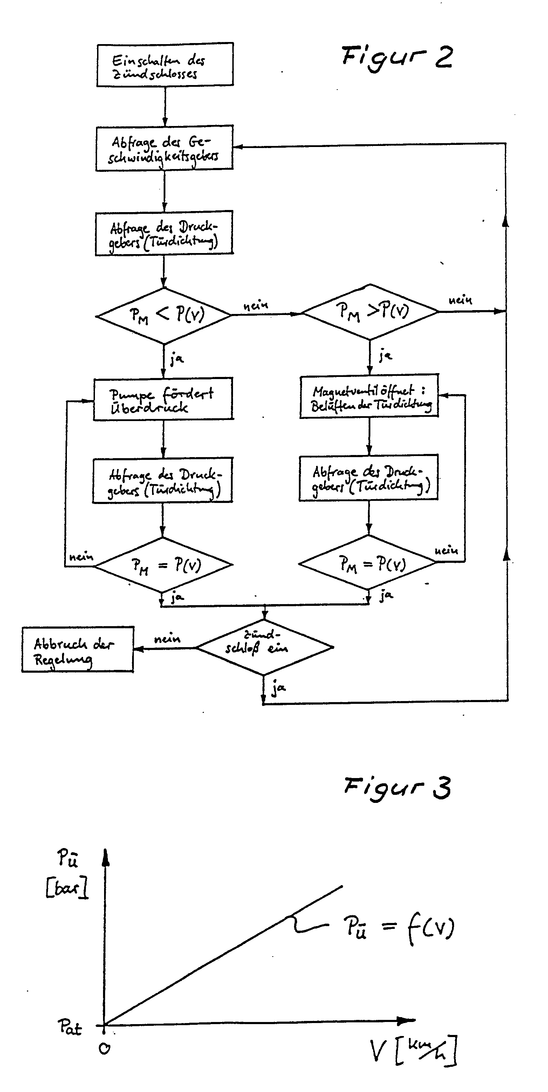

Wie im Flußdiagramm in Figur 2 zu sehen ist, wird die Regelung des Innenraumdrucks durch das Einschalten des Zündschlosses des Fahrzeuges ausgelöst. Nun erfolgt erst die Abfrage der momentanen Fahrgeschwindigkeit und die Abfrage des momentanen Druckes im Innenraum 4.

Ist der Druck $P_M$ im Innenraum 7 geringer als der zu der momentanen Fahrgeschwindigkeit gehörende in der Regeleinheit 9 gespeicherte Sollüberdruck $P_{(v)}$, so wird die Pumpe 8 zu Erhöhen des Druckes $P_M$ angesteuert.

Ist der Druck $P_M$ höher als der der momentanen Fahrgeschwindigkeit entsprechende Sollüberdruck $P_{(v)}$, so wird das Magnetventil 6 von der Regeleinheit 9 zum Verbinden des Innenraums 4 mit der Atmosphäre zwecks Druckverringerung angesteuert.

Sowohl bei Druckerhöhung als auch bei Druckverringerung wird weiter der Druck im Innenraum 4 abgefragt und verglichen, ob er dem zur momentanen Fahrgeschwindigkeit gehörenden Sollüberdruck $P_{(v)}$ entspricht.

Ist dies im Fall der Druckerhöhung nicht der Fall, so wird weiterhin die Pumpe 8 zum Erhöhen des Druckes $P_M$ angesteuert während im Fall der Druckverringerung bei noch nicht Erreichen von $P_{(v)}$ weiterhin das Magnetventil 6 zum Verbinden mit der Atmosphäre angesteuert bleibt.

Wird aber in beiden Fällen eine Übereinstimmung von $P_M$ und $P_{(v)}$ festgestellt und ist weiterhin das Zündschloß eingeschaltet, so wird der Regelzyklus mit den Abfragen von Geschwindigkeitsgeber 11 und Druckgeber 10 wieder begonnen.

Bei Ausschalten des Zündschlosses erfolgt der Abbruch der Regelung.

## Ansprüche

1. Schließhilfe für Fahrzeugtüren, insbesondere für Kraftfahrzeugtüren, mit einer als hohles Schlauchprofil ausgebildeten Türdichtung, die an einem Türrahmen angneordnet ist und durch die der Spalt zwischen dem Randbereich der Fahrzeugtür und dem Türrahmen im geschlossenen Zustand der Fahrzeugtür ausfüllbar ist, wobei der Innenraum des Schlauchprofils druckbeaufschlagbar ist, dadurch gekennzeichnet, daß die Höhe des Drucks im Innenraum (4) des Schlauchprofils in Abhängigkeit von der Fahrgeschwindigkeit des Fahrzeuges regelbar ist.

2. Schließhilfe nach Anspruch 1, dadurch gekennzeichnet, daß der Innenraum (4) des Schlauchprofils von einer Überdruckquelle druckbeaufschlagbar ist.

3. Schließhilfe nach Anspruch 2, dadurch gekennzeichnet, daß die Überdruckquelle eine Pumpe (8) ist.

4. Schließhilfe nach Anspruch 2, dadurch gekennzeichnet, daß die Überdruckquelle von einer Steuereinheit (7) ansteuerbar ist.

5. Schließhilfe nach Anspruch 2, dadurch gekennzeichnet, daß die Überdruckquelle über ein Steuerventil mit dem Innenraum (4) des Schlauchprofils verbindbar ist.

6. Schließhilfe nach Anspruch 5, dadurch gekennzeichnet, daß das Steuerventil von der Steuereinheit (7) ansteuerbar ist.

7. Schließhilfe nach Anspruch 6, dadurch gekennzeichnet, daß das Steuerventil ein Magnetventil (6) ist.

8. Schließhilfe nach Anspruch 6, dadurch gekennzeichnet, daß die Steuereinheit (7) eine Regeleinheit (9) aufweist, der ein Geschwindigkeitssignal der Fahrgeschwindigkeit des Fahrzeuges sowie ein Drucksignal des Drucks im Innenraum (4) des Schlauchprofils zuleitbar ist.

9. Schließhilfe nach Anspruch 8, dadurch gekennzeichnet, daß das Geschwindigkeitssignal von einem Geschwindigkeitsgeber (11) und das Drucksignal von einem den Druck im Innenraum (4) des Schlauchprofils erfassenden Druckgeber (10) erfaßbar und der Regeleinheit (9) zuleitbar ist.

10. Schließhilfe nach Anspruch 8, dadurch gekennzeichnet, daß die Regeleinheit (9) eine elektronische Regeleinheit (9) ist, und daß die Druckregelung nach einer Funktion $P_{\ddot{u}} = f\,(v)$ erfolgt, die in einem Speicher der Regeleinheit (9) gespeichert ist.

11. Schließhilfe nach Anspruch 10, dadurch gekennzeichnet, daß die Druckregelung eine Dreipunktregelung ist, durch die bei geringerem Innenraumdruck als dem der momentanen Fahrgeschwindigkeit entsprechendem Solldruck der Innenraum von der Überdruckquelle druckbeaufschlagbar ansteuerbar ist, durch die bei dem Solldruck entsprechendem Innenraumdruck der Innenraum (4) absperrbar ist und durch die bei größerem Innenraumdruck als dem der momentanen Fahrgeschwindigkeit entsprechenden Solldruck der Innenraum (4) mit der Atmosphäre verbindbar ist.

12. Schließhilfe nach Anspruch 11, dadurch gekennzeichnet, daß eine Druckregelung unterhalb einer Mindestabweichung des Innenraumdruckes von dem der momentanen Fahrgeschwindigkeit entsprechenden Solldruck sperrbar ist.

FIG.1

Figur 2

Figur 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 514 231 (DAIMLER BENZ) <br> * Seite 10, Zeilen 27-30; Figur 3 * <br> --- | 1,2 | B 60 R 13/06 |
| A | DE-A-2 818 225 (AUDI) <br> * Seite 6, Zeile 28 - Seite 7, Zeile 9; Figur 1 * <br> --- | 1,2,4-6 | |
| A | FR-A-2 172 815 (DUNLOP) <br> * Seite 1, Zeilen 4-27; Figuren 1,3 * <br> ----- | | |

|  |  |
|---|---|
| | **RECHERCHIERTE SACHGEBIETE (Int. Cl.4)** |
| | B 60 J <br> B 60 R <br> F 16 J <br> B 64 C |

Der vorliegende Recherchenbericht wurde für alle Patentansprüche erstellt

| Recherchenort | Abschlußdatum der Recherche | Prüfer |
|---|---|---|
| DEN HAAG | 31-10-1988 | FOGLIA A. |